(19) **Europäisches Patentamt**

**European Patent Office**

**Office européen des brevets**

(11) **EP 1 586 749 A1**

(12) **EUROPEAN PATENT APPLICATION**

(43) Date of publication:
**19.10.2005 Bulletin 2005/42**

(51) Int Cl.7: **F01L 1/34**, F01L 1/344

(21) Application number: **05007864.1**

(22) Date of filing: **11.04.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventors:<br>• **McCabe, Thomas**<br>  **Waltham MA 02452 (US)**<br>• **Ekdahl, Earl**<br>  **Ithaca, New York 14850 (US)** |
| (30) Priority: **15.04.2004 US 562446 P**<br>        **04.06.2004 US 860983** | (74) Representative: **Petruzziello, Aldo**<br>**Racheli & C. S.p.A.**<br>**Viale San Michele del Carso, 4**<br>**20144 Milano (IT)** |
| (71) Applicant: **BorgWarner Inc.**<br>**Auburn Hills, MI 48326-2872 (US)** | |

(54) **Method and apparatus for extended cam position measurement**

(57)    A system and method for determining a phase offset in a system having at least two rotating shafts moving in relation to each other is provided including a scheme, wherein two sets of registers having a first set of registers associated with the first rotating shaft, and the second set of registers associated with the second rotating shaft, providing at least one flag for directing or pointing at a particular register for storing values relating to the consecutive pulses; providing a controller for controlling the flag and the storage of values; determining a register among the set of registers shall store data; and pointing the flag to the register, thereby the information relating to phase shall not be lost or overwritten by using a single set of register for a single type of information.

Fig. 8

**100**

**EP 1 586 749 A1**

**Description**

REFERENCE TO PROVISIONAL APPLICATION

This application claims an invention which was disclosed in Provisional Application Number 60/562,446, filed 04/15/2004 entitled "METHOD AND APPARATUS FOR EXTENDED CAM POSITION MEASUREMENT". The benefit under 35 USC §119(e) of the United States provisional application is hereby claimed, and the aforementioned application is hereby incorporated herein by reference.

FIELD OF THE INVENTION

The invention pertains to the field of cam position measurement. More particularly, the invention pertains to extended cam position measurement and calibration at positions using enhance closed - loop control in a variable cam timing (VCT) system

BACKGROUND OF THE INVENTION

VCT systems are known to use a feedback loop for controlling a phase relationship.
United State lay open patent application No 2003-0230264 A1, which is hereby incorporated herein by reference, discloses a method for compensating for variable cam timing of an internal combustion engine is provided. The method includes: a) providing a periodical crank pulse signal; b) providing a periodical cam pulse signal; c) determining a segment, wherein the internal combustion engine speed induces a volatile change upon Zphase values; d) dividing the segment into sub-segments; and e) calculating Zphase values of a plurality of points within the sub-segments.
United States Patent No. 5,289,805 which is hereby incorporated herein by reference, discloses a camshaft (26) has a vane (60) secured to an end thereof for non-oscillatable rotation therewith. The camshaft also carries a sprocket (32) which can rotate with the camshaft (26) but which is also oscillatable with the camshaft (26). The vane (60) has opposed lobes (60a, 60b) which are received in opposed recesses (32a, 32b), respectively, of the sprocket (32). The recesses have greater circumferential extent than the lobes (60a, 60b) to permit the vane (60) and sprocket (32) to oscillate with respect to one another, and thereby permit the camshaft (26) to change in phase relative to a crankshaft whose phase relative to the sprocket (32) is fixed by virtue of a chain drive (38) extending therebetween.
Cam Position (aka phase) Measurement, as is specified in United States Patent No. 5,289,805 which is hereby incorporated herein by reference, is implicitly limited to the phase angle between successive teeth on the crank and cam pulse wheels. Thereby, a "moveable" cam pulse can be compared to two "fixed" crank teeth to determine the phase of that cam pulse in relation to the crank pulses. However, this does not remain true if the moveable cam pulse moves outside of the boundary of the two crank pulses. In one arbitrary example, with 4 teeth on the crank wheel, and 8 teeth on the cam wheel, we are limited to 90 degrees of phase measurement. A computer program product tends to allow some operative margin at both ends thereby reducing the limited 90 degrees of phase measurement further. In other words, once calibrated, the effective range is reduced further to 80 degrees in that for the cam pulse to vary in timing in the 90-degree window, with 5 degrees of safety at either end. In effect, the phase measurement occurs from 5 to 85 degrees. This compensation is due to the introduction of the computer program product.
The 5 degrees of safety ensures that due to some errors in phase measurement, and timing chain stretch, a negative phase reading shall not occur. During the calibration process, the camshafts are moved to the full-advance position, and the phase, plus the 5-degree offset, is recorded and stored as a variable called Z-phase. This Z-phase measurement is subtracted from all phase measurements to compensate for differences in pulse-wheel mounting between each of the camshafts, and in relation to the crank. This 90-degree spacing on the crank pulses is the limiting factor for measuring phase beyond 90 degrees. The computer program product can tolerate 1 crossover situation, where the cam pulse slides out of the window between crank pulses, for this is compensated for in the Z-phase measurement. However there is no provision for a second crossover, which would occur in measuring beyond 90 degrees.

SUMMARY OF THE INVENTION

The present invention provides a system and method for extended cam position measurement and calibration at any known position.
The present invention provides a system and method for solving the problem supra by providing at least one set of storage means such as registers in a controller for storing new information about the offset without losing the old information.
The present invention provides a means for offering a solution in which the idea is to use multiple sets of registers for storing the timer information, and use flags to switch between them, where flags will indicate which registers were just updated.

The present invention provides a apparatus and method for solving the problem of inaccurate recordation of prior art VCT systems when the phaser moves past 90 degrees and the crank tooth timer value that is used as a reference for calculating phase has been overwritten.

Accordingly, a method for determining a phase offset in a system having at least two rotating shafts moving in relation to each other. The method includes: providing a first device associated with a first rotating shaft, wherein the first device is disposed to generate a first set of pulses; providing a second device associated with a second rotating shaft, wherein the second device is disposed to generate a second set of pulses; providing a scheme, wherein a first set of consecutive pulses of at least two pulses of the first set of pulses corresponds a second set of consecutively pulses of at least two pulses of the second set of pulses; providing two sets of registers having a first set of registers associated with the first rotating shaft, and the second set of registers associated with the second rotating shaft, the first set of registers comprising at least two registers, and the second set of registers comprising at least two registers; providing at least one flag for directing or pointing at a particular register for storing values relating to the consecutive pulses; providing a controller for controlling the flag and the storage of values; determining a register among the set of registers shall store data; and pointing the flag to the register, thereby the information relating to phase shall not be lost or overwritten by using a single set of register for a single type of information.

Accordingly, a system for determining a phase offset having at least two rotating shafts moving in relation to each other is provided. The system includes: a first device associated with a first rotating shaft, wherein the first device is disposed to generate a first set of pulses; a second device associated with a second rotating shaft, wherein the second device is disposed to generate a second set of pulses; a scheme, wherein a first set of consecutive pulses of at least two pulses of the first set of pulses corresponds a second set of consecutively pulses of at least tow pulses of the second set of pulses; two sets of registers having a first set of registers associated with the first rotating shaft, and the second set of registers associated with the second rotating shaft, the first set of registers comprising at least two registers, and the second set of registers comprising at least two registers, wherein at least one flag is being used for directing or pointing at a particular register for storing values relating to the consecutive pulses, a determination is made as to which register among the set of registers shall store date based upon a pointer of the flag thereby the information relating to phase shall not be lost or overwritten by using a single set of register for a single type of information; and a controller for controlling the flag and the storage of values, and the first and second sets of pulses.

## BRIEF DESCRIPTION OF THE DRAWINGS

Fig. 1 shows a prior art feedback loop.
Fig. 2 shows part of Fig. 1 in detail.
Fig. 3a shows a phaser at full advance position.
Fig. 3b shows a phaser at 40 degrees from the full advance position.
Fig. 3c shows a phaser at 85 degrees from the full advance position.
Fig. 3d shows a phaser at 100 degrees from the full advance position.
Fig. 3e shows a phaser at 140 degrees from the full advance position.
Fig. 3f shows a phaser at 175 degrees from the full advance position.
Fig. 4 shows an example, where an 180 degree range can be accurately obtained.
Fig. 5 shows a first scheme of calibration at full advance position.
Fig. 6 shows a second scheme of calibration of the present invention.
Fig. 7 shows a third scheme of calibration of the present invention.
Fig. 8 is a flowchart of the present invention.
Fig. 9a shows a first pulse wheel for the present invention.
Fig. 9b shows a second pulse wheel for the present invention.

## DESCRIPTION OF THE PREFERRED EMBODIMENT

This section includes the descriptions of the present invention including the preferred embodiment of the present invention for the understanding of the same. It is noted that the embodiments are merely describing the invention. The claims section of the present invention defines the boundaries of the property right conferred by law.

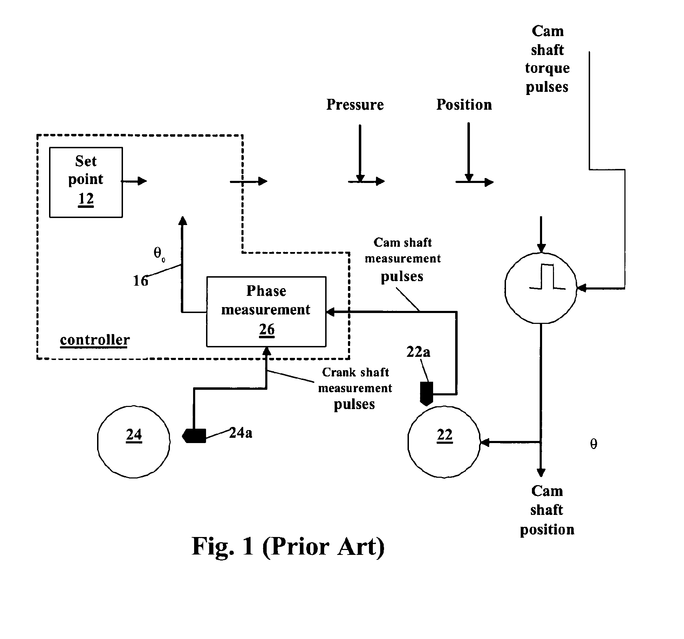

Referring to Fig. 1, a prior art feedback loop 10 is shown. The control objective of feedback loop 10 is to have a spool valve in a null position. In other words, the objective is to have no fluid flowing between two fluid holding chambers of a phaser (not shown) such that the VCT mechanism at the phase angle given by a set point 12 with the spool 14 stationary in its null position. This way, the VCT mechanism is at the correct phase position and the phase rate of change is zero. A control computer program product which utilizes the dynamic state of the VCT mechanism is used to accomplish the above state.

The VCT closed-loop control mechanism is achieved by measuring a camshaft phase shift $\theta_0$ 16, and comparing the same to the desired set point 12. The VCT mechanism is in turn adjusted so that the phaser achieves a position which is determined by the set point 12. A control law 18 compares the set point 12 to the phase shift $\theta_0$ 16. The compared result is used as a reference to issue commands to a solenoid 20 to position the spool 14. This positioning of spool 14 occurs when the phase error (the difference between set point r 12 and phase shift 20) is non-zero.

The spool 14 is moved toward a first direction (e.g. right) if the phase error is negative (retard) and to a second direction (e.g. left) if the phase error is positive (advance). It is noted that the retarding with current phase measurement scheme gives a larger value, and advancing yields a small value. When the phase error is zero, the VCT phase equals the set point 12 so the spool 14 is held in the null position such that no fluid flows within the spool valve.

Camshaft and crankshaft measurement pulses in the VCT system are generated by camshaft and crankshaft pulse wheels 22 and 24, respectively. As the crankshaft (not shown) and camshaft (also not shown) rotate, wheels 22, 24 rotate along with them. The wheels 22, 24 possess teeth which can be sensed and measured by sensors according to measurement pulses generated by the sensors. The measurement pulses are detected by camshaft and crankshaft measurement pulse sensors 22a and 24a, respectively. The sensed pulses are used by a phase measurement device 26. A measurement phase difference is then determined. The phase between a cam shaft and a crankshaft is defined as the time from successive crank-to-cam pulses, divided by the time for an entire revolution and multiplied by 360.degree. The measured phase may be expressed as $\theta_0$ 16. This phase is then supplied to the control law 18 for reaching the desired spool position.

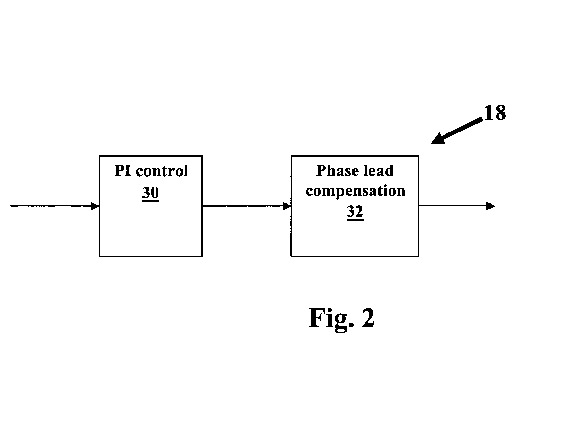

A control law 18 of the closed-loop 10 is described in United Patent No. 5,184,578 and is hereby incorporate herein by reference. A simplified depiction of the control law may be shown in Fig. 2. Measured phase 26 is subjected to the control law 18 initially at block 30 wherein a Proportional-Integral (PI) process occurs. PI process is the sum of two sub-processes. The first sub-process includes amplification; and the second sub-process includes integration. Measured phase is further subjected to phase compensation at block 32, where control signal is adjusted to increase the overall control system stability before it is sent out to drive the actuator, in the instant case, a variable force solenoid.

In an example with 4 teeth on the crank wheel, with 4 crank pulses per revolution, we are limited to measuring phase within the 90-degree spacing between the teeth. One way to resolve this would be to use a pulse-wheel with only 3 teeth, which would give us a 120-degree window. Another would be to use a pulse-wheel with 2-teeth, and a 180 degree window. However, the problem with these resolutions or arrangements is that we generally cannot get an updated phase measurement at the intervals we require. This is particularly a problem at lower engine speeds. Therefore, in order to provide the control system with phase updates at a faster rate, it has been determined that in most cases, a higher update rate is required.

Currently, we capture the crank timer value, and make a calculation of the time between pulses using the previous crank timer value, and then we also store the current crank timer value. We also capture the cam timer value (for up to 4 cams) and store it. Both of these operations occur in the timer interrupt service routines, in the computer program product. In the main control loop, we reference these stored values, and make the calculation for phase. The following table shows the current parameters, stored in registers, used in the computer program product for phase measurement. There are currently 4 cams, but the number of cams can vary, and it is represented by CamXT0.

| NeTimeStamp | Latest timer value of crank | Unsigned integer (2 bytes) |
|---|---|---|
| NePeriod | NeTimeStamp - NeTimeStamp(old) time between pulses | Unsigned integer (2 bytes) |
| Cam1TimeLag | Latest timer value of cam 1 | Unsigned integer (2 bytes) |
| CamXTimeLag | Latest timer value of cam X | Unsigned integer (2 bytes) |

With the above arrangement, the problem lies in that when the phaser moves past the window spacing determined by the number of crank teeth, 90 degrees in our example case, the cam tooth event happens further away from the crank event. With the fixed relationship between the two, we receive a 2nd crank event before we have time to receive the cam event. Therefore, in our example, a phaser at a position of 95 degrees away from crank, the measured phase would be 5 degrees, because the calculation would be based on the crank event, which has just been overwritten.

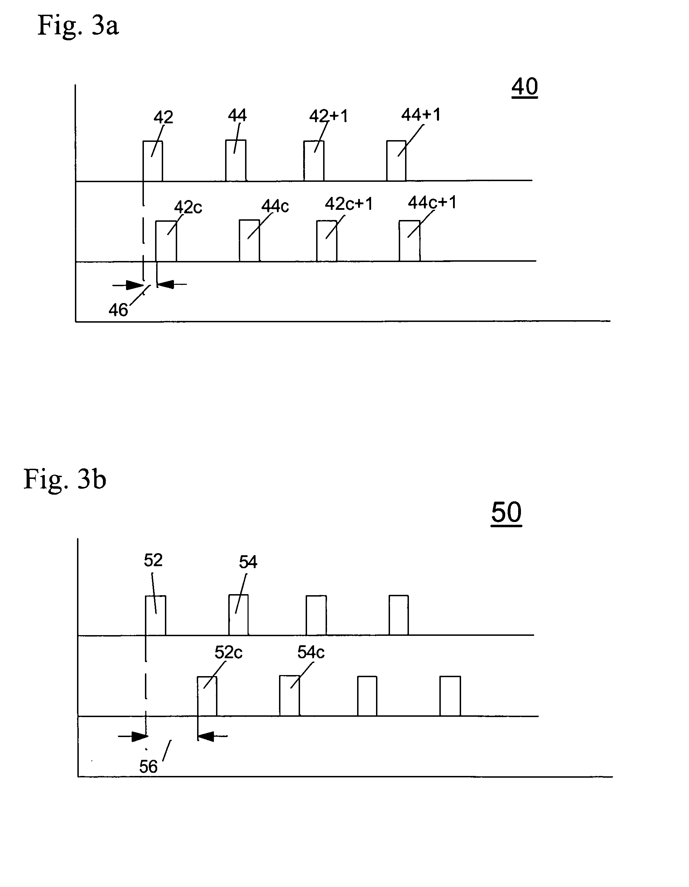

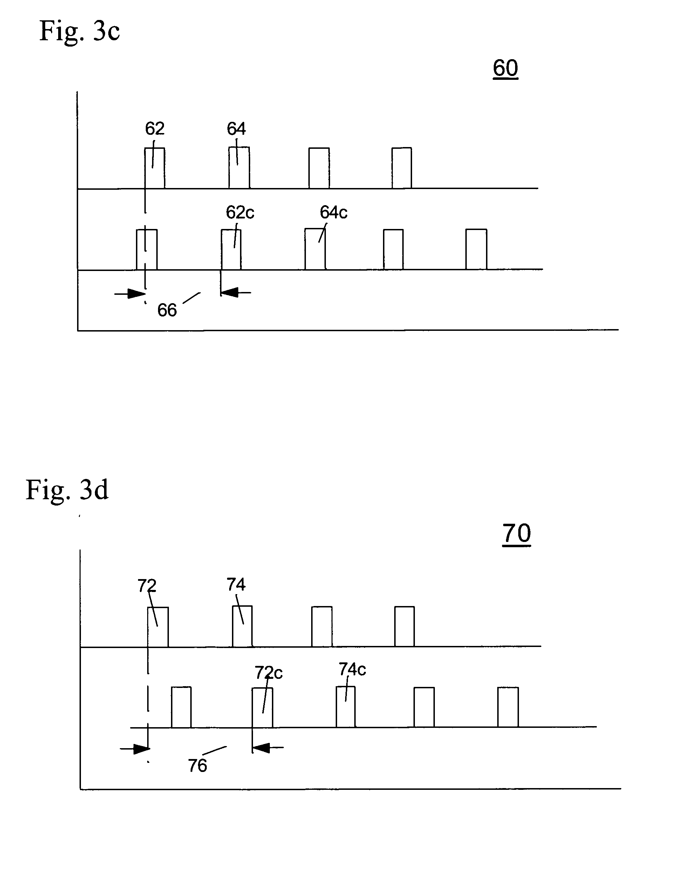

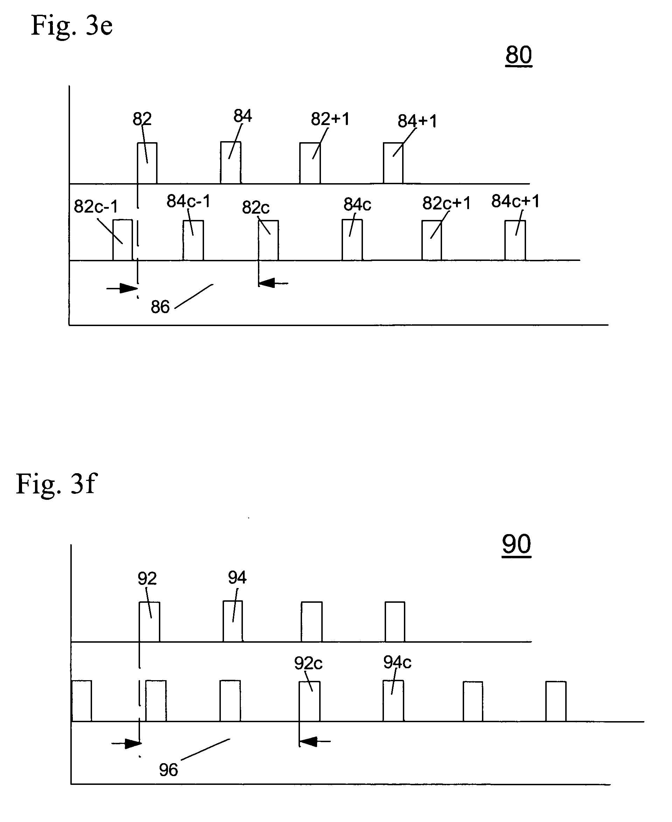

See the following diagrams, Figs. 3a, 3b, 3c, 3d, 3e.and 3f. The crank pulses are denoted by n2 and n4, where n stands for a positive integer 4-9 respectively with regard to various figures as shown. Note that some of crank pulses are denoted by n2+1 or n2-1 depending on their respective sequential order along the time line. Similarly, the cam pulses are denoted by n2c and n4c, where n stands for a positive integer 4-9 respectively with regard to various figures as shown. Note that some of crank pulses are denoted by n2c+1 or n2c-1 depending on their respective sequential order along the time line. As can be seen, the crank and cam pulses as shown in Figs. 3a-f are meant to shown the calibration off sets in the various situations shown. Referring to Fig. 3a a phaser a full advance position 40 is shown. Note that the crank pulse events 42 and 44 corresponds to a calibration offset 46 at 5 degrees but the measured phase according to a controller is zero degrees. The cam events corresponding to crank pulse events are 42c and 44c. Further the x-coordinate denotes time.

Referring to Fig. 3b a phaser at 40 degrees from the full advance position 50 is shown. Note that the crank pulse events 52 and 54 corresponds to a calibration offset 56 at about 40 degrees but the measured phase according to a controller is zero degrees. The cam events corresponding to crank pulse events are 52c and 54c. Further the x-coordinate denotes time.

Referring to Fig. 3c a phaser at 85 degrees from the full advance position 60 is shown. Note that the crank pulse events 62 and 64 corresponds to a calibration offset 66 at about 85 degrees but the measured phase according to a controller is zero degrees. The cam events corresponding to crank pulse events are 62c and 64c. Further the x-coordinate denotes time.

Referring to Fig. 3d a phaser at 100 degrees from the full advance position 70 is shown. Note that the crank pulse events 72 and 74 corresponds to a calibration offset 76 at 100 degrees but the measured phase according to a controller is zero degrees. The cam events corresponding to crank pulse events are 72c and 74c. Further the x-coordinate denotes time. As can be seen, here the cam pulse events are slightly out of range.

Referring to Fig. 3e a phaser at 140 degrees from the full advance position 80 is shown. Note that the crank pulse events 82 and 84 corresponds to a calibration offset 86 at about 140 degrees but the measured phase according to a controller is zero degrees. The cam events corresponding to crank pulse events are 82c and 84c. Further the x-coordinate denotes time. As can be seen, here the cam pulse events are more out of range.

Referring to Fig. 3f a phaser at 175 degrees from the full advance position 90 is shown. Note that the crank pulse events 92 and 94 corresponds to a calibration offset 96 at about 175 degrees but the measured phase according to a controller is zero degrees. The cam events corresponding to crank pulse events are 92c and 94c. Further the x-coordinate denotes time. As can be seen, here the cam pulse events are way out of range.

As shown supra, when the offsets increases to a value out of a predetermined range, prior art systems cannot accurately process the information in that wrong information are stored in memory or any suitable storage device. The present invention provides a system and method for solving the problem supra by providing at least one set of storage means such as registers in a controller for storing new information about the offset without losing the old information.

The present invention can be conceptually shown infra by offering a solution in which the idea is to use multiple sets of registers for storing the timer information, and use flags to switch between them. These flags will indicate which registers were just updated, and correspondingly, which registers contain the latest information for making the phase calculation.

As can be seen the timer values include both crank pulse and cam pulse timer values. When receiving timer values for the crank, the crank flag is interrogated to indicate which registers the new values will be saved in. in other words, the crank flag indicates where the new values is going to be saved. Once the values are saved, the flag, crank flag, is set to the next position, so that the next time we receive a timer value, it will be saved in an alternate register.

When the main control loop needs to calculate phase, and update its current stored value for phase purposes, a method is provided that will check the cam register flag to determine which register contains the latest value. The latest cam value is, in turn, used, along with the corresponding crank value, in order to make the phase calculation.

As can be seen, the present invention provides a apparatus and method for solving the problem of inaccurate recordation of prior art VCT systems when the phaser moves past 90 degrees and the crank tooth timer value that is used as a reference for calculating phase has been overwritten. This new value makes the calculated phase measurement 90 degrees less than the actual value. By referencing multiple registers, as we pass 90 degrees, the cam will reference the same crank event for timing, even if a new crank event occurs before the cam event arrives. In other words, the same cam event will always reference the same crank event, regardless of other events taking place in-between through a phase shift. It is noted that the difference between two crank events would represent 90 degrees, but adding two values together would result in an arbitrary and meaningless number.

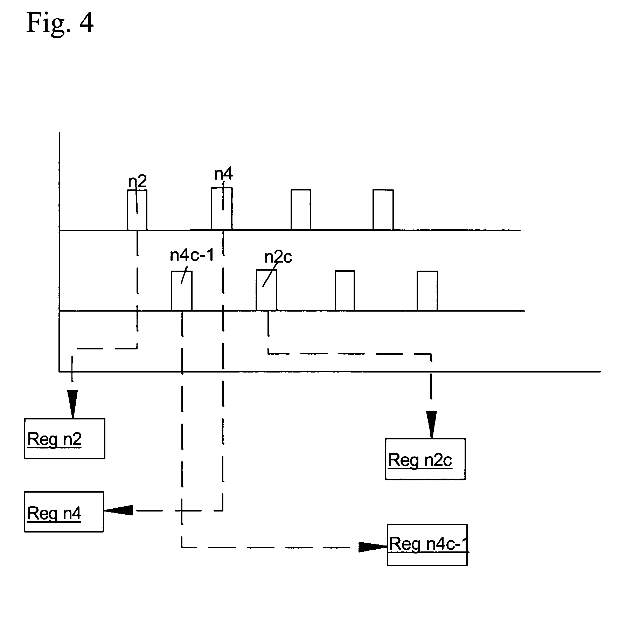

Referring to Fig. 4, an example, where an 180 degree range can be accurately obtained instead of merely 90 degrees in the prior art. In other words, it is wished to obtain phase measurement to about 180 degrees, by using a 4-tooth crank wheel, and an 8-tooth cam wheel. With a 4 tooth crank wheel, we will receive a new crank event every 90 degrees. By using 2 sets of redundant registers, we can achieve this measurement beyond 90, up to 180 degrees. An advantage using this scheme is that we can still maintain receiving updates for the phase measurement every 90 crank degrees. Register n2 is provided to store information relating to a first crank pulse event. Register n4 is provided to stored information relating to a second crank pulse event. In the prior art VCT systems, the crank event that cam pulse n2 needs to make a phase calculation gets over written here, but in the present invention it is saved in a separate register, i.e. Register n4 and the value that cam pulse n2 can be still used as the value stored in crank register n2.

A set of two more registers are used to store information relating to cam events. The set of two more registers are register n2c and register n4c-1.

Each set of registers can provide numbers for or values representing a phase measurement every 180 degrees, but with two sets of registers, they are staggered so that one is always available every 90 degrees.

By way of an example, we examine this method suitable for implementing a computer program product with 2 sets of registers, and a 4/8 tooth relationship between crank and cam, respectively. This will give us measurement up to 180 degrees. In practice we insert 5 degrees of safety on either end of the band, so we essentially only have 170 degrees. It should also be noted that the present invention is contemplates apparatus and methods suitable for implementing a computer program product having different numbers of registers, or pulse wheels with different numbers of teeth, to thereby obtain the phase measurement range needed, on a particular system configuration. Also, this concept is suitable for measuring the relative position of one shaft relative to another, in any suitable arbitrary 2-shaft system.

The following are the registers needed for this configuration:

| | | |
|---|---|---|
| NeTimeStamp_A | Reg. A, Latest timer value of crank | Unsigned integer (2 bytes) |
| NePeriod_A | Reg. A, NeT0_A - NeT0_A_old, time btn. pulses | Unsigned integer (2 bytes) |
| NeTimeStamp_B | Reg. B, Latest timer value of crank | Unsigned integer (2 bytes) |
| NePeriod_B | Reg. B, NeT0_B - NeT0_B_old, time btn. pulses | Unsigned integer (2 bytes) |
| NeFlag | Register switching flag, 0 = A, 1 = B | Unsigned char. (1 byte) |
| LE_TimeLag_A | Reg. A, time offset value, LE cam | Unsigned integer (2 bytes) |
| LE_TimeLag_B | Reg. B, time offset value, LE cam | Unsigned integer (2 bytes) |
| LE_Flag | Register switching flag, 0 = A, 1 = B | Unsigned char. (1 byte) |
| ... | ... | ... |

The Left Exhaust cam (LE) is used as an example, though more cams can be added (as required), following the same logic as the Left Exhaust cam.

It should be noted that for this application, the flag bits will be set *after* each register is filled, to indicate the other register is ready to be written. Thus, when we enter the interrupt routines, the register indicated by the flag will be the correct one written to immediately.

The following is the Crank Interrupt Routine:

If (( NeFlag & 0x01 ) == 0 )

NePeriod_A = TC_crank – NeTimeStamp_A;        // TC_crank is the system timer //register, NeT0_A still has old value in it

NeTimeStamp_A = TC_crank;        // Now update timer value

NeFlag = NeFlag | 0x01;        // set flag to indicate other register.

else

NePeriod_B = TC_crank – NeTimeStamp_B;        // TC_crank is the system timer //register, NeT0_B still has old value in it

NeTimeStamp_B = TC_crank;        // Now update timer value

NeFlag = NeFlag & (~0x01); // clear flag to indicate other register.

End if

The following are the LE Cam Interrupt Routine:

If (( LE_Flag & 0x01 ) == 0 )

LE_TimeLag_A = TC_LE_cam – NeT0_A;

// TC_LE_cam is system timer register

// records time difference from Crank event.

LE_Flag = LE_Flag | 0x01;    // set flag to indicate other register.

else

LE_TimeLag_B = TC_LE_cam – NeT0_B;  // TC_LE_cam is system timer register

// records time difference from Crank event.

LE_Flag = LE_Flag & (~0x01);        // clear flag to indicate other register.

End if

The following is the LE Phase Calculation (inside main control loop):

If (( LE_Flag & 0x01 ) == 0 )

// calc_phase uses the A values to calculate phase

LE_Phase = calc_phase( LE_TimeLag_A , NePeriod_A, LE_Zphase );

else

// calc_phase uses the B values to calculate phase

LE_Phase = calc_phase( LE_TimeLag_B , NePeriod_B, LE_Zphase );

End if

The present invention contemplates the Calibration of a two shaft system at Any Known Position. United States Patent # 5,289,805 which is hereby incorporated herein by reference, teaches a Self-Calibrating Camshaft Timing System, wherein the present invention for calibration may be used. The present invention is applicable to the concept of Extended Phase Measurement. The VCT system calibration uses the measured phase to determine calibration values. One important thing to note is that calibration can be done from *any* known position in the phaser range of travel. It was initially specified that the phaser would have to be in the Full-Advanced position.

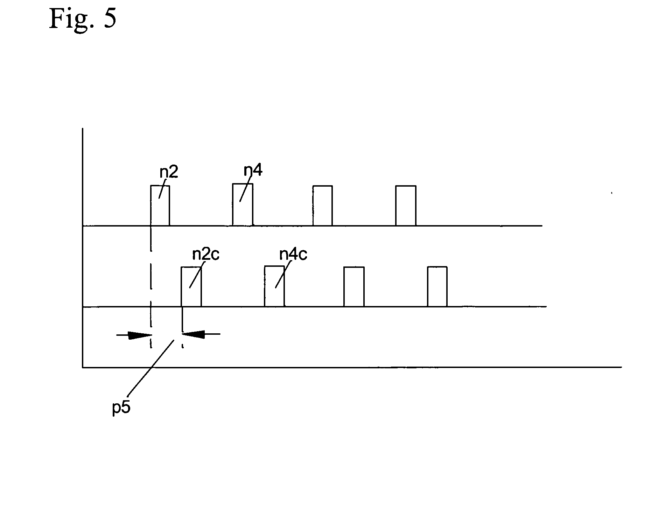

Referring to Fig. 5, a calibration at full advance position is shown. In this example, due to mounting of the pulse-wheel, at Full-Advance, the actual phase p5 measured is 25 degrees. The calibration value is calculated to be:

$$zphase = phase\_reading(A \text{ or } B) - zphase\_offset,$$

where phase_reading is the actual phase (25 degrees), and zphase_offset is a constant (5 degrees).

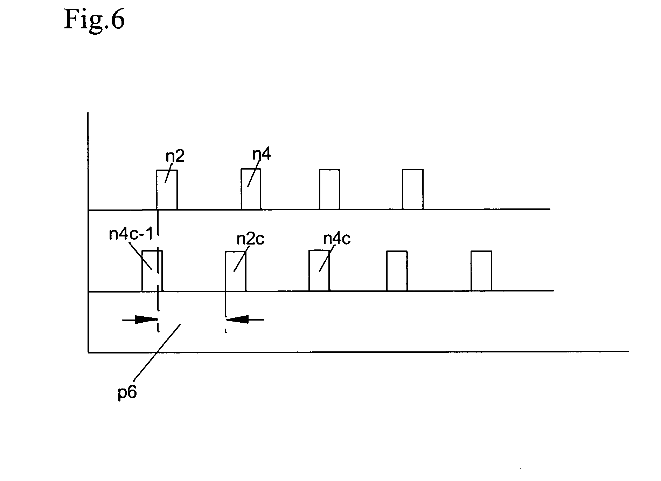

Furthermore, by knowing the number of degrees away from the Full-Advanced position, we can calibrate at any known position. For example, in a phaser which has 60 degrees of travel, we can calibrate at Full-Retard, and from the recorded calibration value, we will subtract 60 degrees, and will provide correct calibration at that position. Referring to Fig. 6 by way of an example, Due to mounting of the pulse-wheel, at Mid-Position, the actual phase measured is 45 degrees. The calibration value is calculated to be:

$$zphase = phase\_reading(A \text{ or } B) - zphase\_offset - known\_shift,$$

where phase_reading is the actual phase (85 degrees), zphase_offset is a constant (5 degrees), and known_shin is the known phase difference from Full-Retard to Full-Advanced (60 degrees). In this example, the phasers Full-Retard position is located 60 degrees from the Full-Advance, where the actual phase is at 85 degrees.

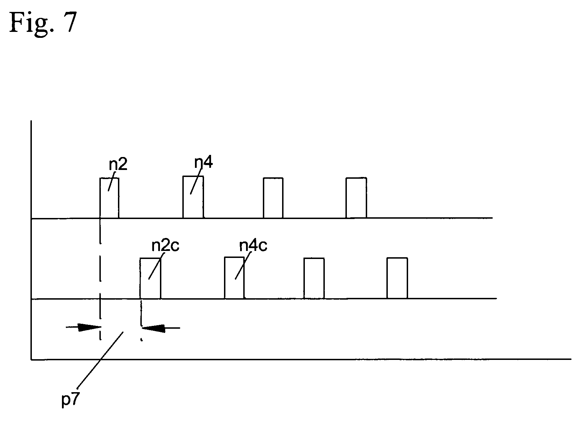

Another example would be if we had a mid-position lock on the phaser that locked the device at 25 degrees away from Full-Advance. We would perform the calibration, and then subtract 25 degrees from the calibration value to obtain the correct calibration. Referring to Fig. 7, by way of an example, Due to mounting of the pulse-wheel, at Mid-Position, the actual phase measured is 45 degrees. The calibration value is calculated to be:

$$zphase = phase\_reading(A \text{ or } B) - zphase\_offset - known\_shift,$$

where phase_reading is the actual phase (45 degrees), zphase_offset is a constant (5 degrees), and known_shift is the known phase difference from Mid-Position to Full-Advanced (25 degrees). In this example, the phasers Mid-Position is located 25 degrees from the Full-Advance. Where the actual phase P7 is at 45 degrees.

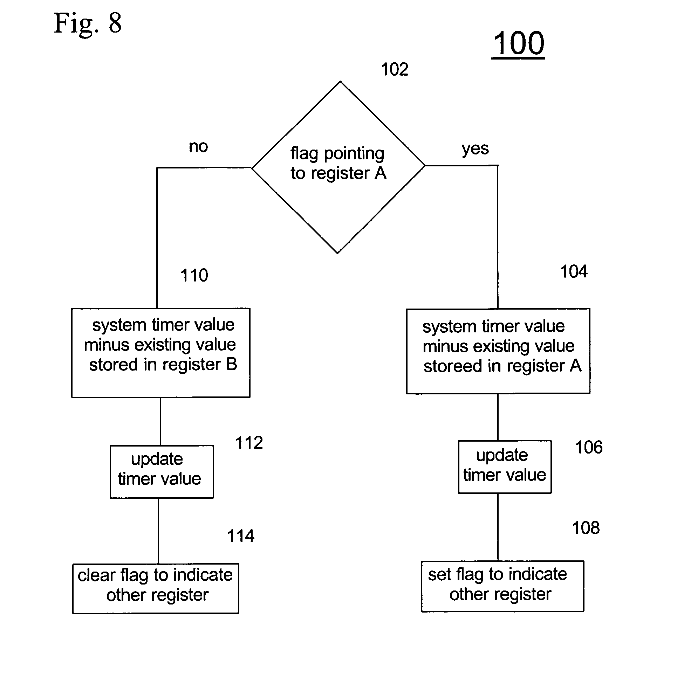

Referring to Fig. 8, a flowchart 100 of the present invention is shown. Flowchart 100 is applicable to a 2 register system. As discussed supra, more than 2 registers may be used. A determination 102 is made as to whether a flag is point to register A. If the flag is pointing toward register A, a first difference 104 is obtained by system timer value minus existing value already stored within register A. Therefore, a first updated timer value 106 is obtained. The flag, in turn, is set 108 to direct toward a register other than register A, e.g. register B or any other register of the system.

Similarly, if the flag is not pointing toward register A, a second difference 110 is obtained by system timer value minus existing value already stored within a register other than register A such as register B. Therefore, a second updated timer value 112 is obtained. The flag, in turn, is set 114 to direct toward a register other than register B, e.g. register A or any other register of the system.

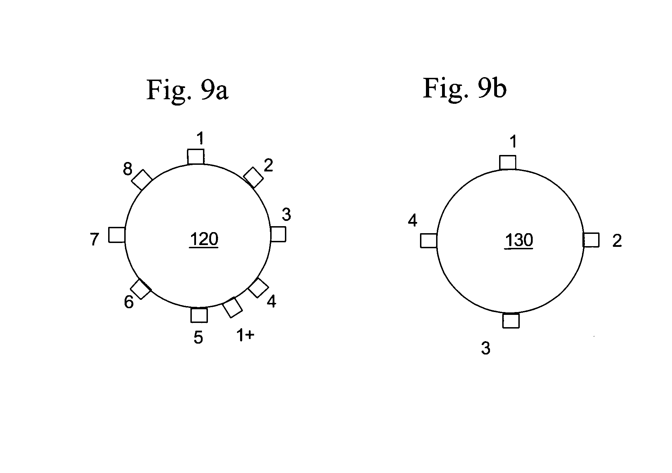

Referring to Fig. 9a, a first pulse wheel 120 suitable of the implementation of the present invention is depicted. Wheel has 8 teeth, and may possess an extra teeth +1 for indexing purposes in that a controller may determine at what point the generated pulses are in relation to rotation. For example, wheel 120 may be mounted on at least one cam shaft of an internal combustion engine.

Referring to Fig. 9b, a second pulse wheel 130 suitable of the implementation of the present invention is depicted. Wheel has 4 teeth. Wheel 120 may be mounted on a crank shaft of an internal combustion engine.

One embodiment of the invention is implemented as a program product for use with a computer system. The program(s) of the program product defines functions of the embodiments can be contained on a variety of signal-bearing media. Illustrative signal-bearing media include, but are not limited to: (i) information permanently stored on in-circuit programmable devices like PROM, EPPOM, etc; (ii) information permanently stored on non-writable storage media (*e.g.*, read-only memory devices within a computer such as CD-ROM disks readable by a CD-ROM drive); (iii) alterable information stored on writable storage media (*e.g.*, floppy disks within a diskette drive or hard-disk drive); (iv) information conveyed to a computer by a communications medium, such as through a computer or telephone network, including wireless communications, or a vehicle controller of an automobile. Some embodiment specifically includes information downloaded from the Internet and other networks. Such signal-bearing media, when carrying computer-readable instructions that direct the functions of the present invention, represent embodiments of the present invention.

In general, the routines executed to implement the embodiments of the invention, whether implemented as part of an operating system or a specific application, component, program, module, object, or sequence of instructions may be referred to herein as a "program". The computer program typically is comprised of a multitude of instructions that will be translated by the native computer into a machine-readable format and hence executable instructions. Also, programs are comprised of variables and data structures that either reside locally to the program or are found in memory or on storage devices. In addition, various programs described hereinafter may be identified based upon the application for which they are implemented in a specific embodiment of the invention. However, it should be appreciated that any particular program nomenclature that follows is used merely for convenience, and thus the invention should not be limited to use solely in any specific application identified and/or implied by such nomenclature.

The following are terms and concepts relating to the present invention.

It is noted the hydraulic fluid or fluid referred to supra are actuating fluids. Actuating fluid is the fluid which moves the vanes in a vane phaser. Typically the actuating fluid includes engine oil, but could be separate hydraulic fluid. The VCT system of the present invention may be a Cam Torque Actuated (CTA)VCT system in which a VCT system that uses torque reversals in camshaft caused by the forces of opening and closing engine valves to move the vane. The control valve in a CTA system allows fluid flow from advance chamber to retard chamber, allowing vane to move, or stops flow, locking vane in position. The CTA phaser may also have oil input to make up for losses due to leakage, but does not use engine oil pressure to move phaser. Vane is a radial element actuating fluid acts upon, housed in chamber. A vane phaser is a phaser which is actuated by vanes moving in chambers.

There may be one or more camshaft per engine. The camshaft may be driven by a belt or chain or gears or another camshaft. Lobes may exist on camshaft to push on valves. In a multiple camshaft engine, most often has one shaft for exhaust valves, one shaft for intake valves. A "V" type engine usually has two camshafts (one for each bank) or four (intake and exhaust for each bank).

Chamber is defined as a space within which vane rotates. Chamber may be divided into advance chamber (makes valves open sooner relative to crankshaft) and retard chamber (makes valves open later relative to crankshaft). Check valve is defined as a valve which permits fluid flow in only one direction. A closed loop is defined as a control system which changes one characteristic in response to another, then checks to see if the change was made correctly and adjusts the action to achieve the desired result (e.g. moves a valve to change phaser position in response to a command from the ECU, then checks the actual phaser position and moves valve again to correct position). Control valve is a valve which controls flow of fluid to phaser. The control valve may exist within the phaser in CTA system. Control valve may be actuated by oil pressure or solenoid. Crankshaft takes power from pistons and drives transmission and camshaft. Spool valve is defined as the control valve of spool type. Typically the spool rides in bore, connects one passage to another. Most often the spool is located on center axis of rotor of a phaser.

Differential Pressure Control System (DPCS) is a system for moving a spool valve, which uses actuating fluid pressure on each end of the spool. One end of the spool is larger than the other, and fluid on that end is controlled (usually by a Pulse Width Modulated (PWM) valve on the oil pressure), full supply pressure is supplied to the other end of the spool (hence *differential* pressure). Valve Control Unit (VCU) is a control circuitry for controlling the VCT system. Typically the VCU acts in response to commands from ECU.

Driven shaft is any shaft which receives power (in VCT, most often camshaft). Driving shaft is any shaft which supplies power (in VCT, most often crankshaft, but could drive one camshaft from another camshaft). ECU is Engine Control Unit that is the car's computer. Engine Oil is the oil used to lubricate engine, pressure can be tapped to actuate phaser through control valve.

Housing is defined as the outer part of phaser with chambers. The outside of housing can be pulley (for timing belt), sprocket (for timing chain) or gear (for timing gear). Hydraulic fluid is any special kind of oil used in hydraulic cylinders, similar to brake fluid or power steering fluid. Hydraulic fluid is not necessarily the same as engine oil. Typically the present invention uses "actuating fluid". Lock pin is disposed to lock a phaser in position. Usually lock pin is used when oil pressure is too low to hold phaser, as during engine start or shutdown.

Oil Pressure Actuated (OPA) VCT system uses a conventional phaser, where engine oil pressure is applied to one side of the vane or the other to move the vane.

Open loop is used in a control system which changes one characteristic in response to another (say, moves a valve in response to a command from the ECU) without feedback to confirm the action.

Phase is defined as the relative angular position of camshaft and crankshaft (or camshaft and another camshaft, if phaser is driven by another cam). A phaser is defined as the entire part which mounts to cam. The phaser is typically made up of rotor and housing and possibly spool valve and check valves. A piston phaser is a phaser actuated by pistons in cylinders of an internal combustion engine. Rotor is the inner part of the phaser, which is attached to a cam shaft.

Pulse-width Modulation (PWM) provides a varying force or pressure by changing the timing of on/off pulses of current or fluid pressure. Solenoid is an electrical actuator which uses electrical current flowing in coil to move a mechanical arm. Variable force solenoid (VFS) is a solenoid whose actuating force can be varied, usually by PWM of supply current. VFS is opposed to an on/off (all or nothing) solenoid.

Sprocket is a member used with chains such as engine timing chains. Timing is defined as the relationship between the time a piston reaches a defined position (usually top dead center (TDC)) and the time something else happens. For example, in VCT or VVT systems, timing usually relates to when a valve opens or closes. Ignition timing relates to when the spark plug fires.

Torsion Assist (TA)or Torque Assisted phaser is a variation on the OPA phaser, which adds a check valve in the oil supply line (i.e. a single check valve embodiment) or a check valve in the supply line to each chamber (i.e. two check valve embodiment). The check valve blocks oil pressure pulses due to torque reversals from propagating back into the oil system, and stop the vane from moving backward due to torque reversals. In the TA system, motion of the vane due to forward torque effects is permitted; hence the expression "torsion assist" is used. Graph of vane movement is step function.

VCT system includes a phaser, control valve(s), control valve actuator(s) and control circuitry. Variable Cam Timing (VCT) is a process, not a thing, that refers to controlling and/or varying the angular relationship (phase) between one or more camshafts, which drive the engine's intake and/or exhaust valves. The angular relationship also includes phase relationship between cam and the crankshafts, in which the crank shaft is connected to the pistons.

Variable Valve Timing (VVT) is any process which changes the valve timing. VVT could be associated with VCT, or could be achieved by varying the shape of the cam or the relationship of cam lobes to cam or valve actuators to cam or valves, or by individually controlling the valves themselves using electrical or hydraulic actuators. In other words, all VCT is VVT, but not all VVT is VCT.

Accordingly, it is to be understood that the embodiments of the invention herein described are merely illustrative of the application of the principles of the invention. Reference herein to details of the illustrated embodiments are not intended to limit the scope of the claims, which themselves recite those features regarded as essential to the invention.

**Claims**

1. A method for determining a phase offset in a system having at least two rotating shafts moving in relation to each other, comprising:

   providing a first device associated with a first rotating shaft, wherein the first device is disposed to generate a first set of pulses;
   providing a second device associated with a second rotating shaft, wherein the second device is disposed to generate a second set of pulses;
   providing a scheme, wherein a first set of consecutive pulses of at least two pulses of the first set of pulses corresponds a second set of consecutively pulses of at least tow pulses of the second set of pulses;
   providing two sets of registers having a first set of registers associated with the first rotating shaft, and the second set of registers associated with the second rotating shaft, the first set of registers comprising at least two registers, and the second set of registers comprising at least two registers;
   providing at least one flag for directing or pointing at a particular register for storing values relating to the consecutive pulses;
   providing a controller for controlling the flag and the storage of values;

determining a register among the set of registers shall store data; and
pointing the flag to the register, thereby the information relating to phase shall not be lost or overwritten by using a single set of register for a single type of information.

**2.** The method of claim 1, wherein the first rotating shaft is a crank shaft of an internal combustion engine.

**3.** The method of claim 1, wherein the second rotating shaft is a cam shaft of the internal combustion engine.

**4.** The method of claim 1, wherein the first and the second devices are pulse wheels mounted on the first and second shaft respectively.

**5.** The method of claim 4, wherein the pulse wheel on the first shaft has a plurality of teeth.

**6.** The method of claim 5, wherein the pulse wheel on the second shaft has a plurality of teeth.

**7.** The method of claim 1, wherein the system is a VCT system.

**8.** A system for determining a phase offset having at least two rotating shafts moving in relation to each other, comprising:

a first device associated with a first rotating shaft, wherein the first device is disposed to generate a first set of pulses;
a second device associated with a second rotating shaft, wherein the second device is disposed to generate a second set of pulses;
a scheme, wherein a first set of consecutive pulses of at least two pulses of the first set of pulses corresponds a second set of consecutively pulses of at least tow pulses of the second set of pulses;
two sets of registers having a first set of registers associated with the first rotating shaft, and the second set of registers associated with the second rotating shaft, the first set of registers comprising at least two registers, and the second set of registers comprising at least two registers, wherein at least one flag is being used for directing or pointing at a particular register for storing values relating to the consecutive pulses, a determination is made as to which register among the set of registers shall store data based upon a pointer of the flag thereby the information relating to phase shall not be lost or overwritten by using a single set of register for a single type of information; and
a controller for controlling the flag and the storage of values, and the first and second sets of pulses.

**9.** The method of claim 8, wherein the first rotating shaft is a crank shaft of an internal combustion engine.

**10.** The method of claim 8, wherein the second rotating shaft is a cam shaft of the internal combustion engine.

**11.** The method of claim 8, wherein the first and the second devices are pulse wheels mounted on the first and second shaft respectively.

**12.** The method of claim 11, wherein the pulse wheel on the first shaft has a plurality of teeth.

**13.** The method of claim 12, wherein the pulse wheel on the second shaft has a plurality of teeth.

**14.** The method of claim 8, wherein the system is a VCT system.

**Fig. 1 (Prior Art)**

Fig. 2

Fig. 3a

<u>40</u>

42    44    42+1    44+1

42c    44c    42c+1    44c+1

46

Fig. 3b

<u>50</u>

52    54

52c    54c

56

Fig. 3c

60

62    64

62c    64c

66

Fig. 3d

70

72    74

72c    74c

76

Fig. 3e

Fig. 3f

Fig. 4

Fig. 5

Fig.6

Fig. 7

## Fig. 8

<u>100</u>

102

flag pointing
to register A

no

yes

110

system timer value
minus existing value
stored in register B

104

system timer value
minus existing value
storeed in register A

112

update
timer value

106

update
timer value

114

clear flag to indicate
other register

108

set flag to indicate
other register

Fig. 9a

Fig. 9b

120

130

**European Patent Office**

**EUROPEAN SEARCH REPORT**

Application Number

EP 05 00 7864

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 548 995 A (CLINTON ET AL) 27 August 1996 (1996-08-27) * column 7, lines 1-8; figures 5a,7a-7d * * column 8, line 65 - column 9, line 5 * ----- | 1-14 | F01L1/34 F01L1/344 |
| D,A | EP 1 375 834 A (BORGWARNER INC) 2 January 2004 (2004-01-02) * the whole document * & US 2003/230264 A1 (EKDAHL EARL ET AL) 18 December 2003 (2003-12-18) ----- | 1,8 | |
| D,A | US 5 184 578 A (QUINN, JR. ET AL) 9 February 1993 (1993-02-09) * the whole document * ----- | 1-4 | |
| D,A | US 5 289 805 A (QUINN, JR. ET AL) 1 March 1994 (1994-03-01) * the whole document * ----- | 1-14 | |
| A | US 5 245 968 A (KOLIAS ET AL) 21 September 1993 (1993-09-21) * figure 6 * ----- | 1,8 | TECHNICAL FIELDS SEARCHED (Int.Cl.7) F01L |
| A | US 5 462 022 A (USHIDA ET AL) 31 October 1995 (1995-10-31) * figure 4 * ----- | | |

The present search report has been drawn up for all claims

| Place of search | Date of completion of the search | Examiner |
|---|---|---|
| Munich | 8 August 2005 | Clot, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 00 7864

This annex lists the patent family members relating to the patent documents cited in  the above-mentioned European search report.
The members are as contained in the European Patent Office EDP file on
The European Patent Office is in no way liable for these particulars which are merely  given for the purpose of information.

08-08-2005

| Patent document cited in search report | | Publication date | Patent family member(s) | | Publication date |
|---|---|---|---|---|---|
| US 5548995 | A | 27-08-1996 | DE | 4440656 A1 | 24-05-1995 |
| | | | GB | 2284685 A ,B | 14-06-1995 |
| | | | JP | 7180565 A | 18-07-1995 |
| EP 1375834 | A | 02-01-2004 | US | 2003230264 A1 | 18-12-2003 |
| | | | EP | 1375834 A1 | 02-01-2004 |
| | | | JP | 2004019654 A | 22-01-2004 |
| US 2003230264 | A1 | 18-12-2003 | EP | 1375834 A1 | 02-01-2004 |
| | | | JP | 2004019654 A | 22-01-2004 |
| US 5184578 | A | 09-02-1993 | DE | 4307010 A1 | 07-10-1993 |
| | | | JP | 6042317 A | 15-02-1994 |
| | | | US | 5289805 A | 01-03-1994 |
| US 5289805 | A | 01-03-1994 | US | 5184578 A | 09-02-1993 |
| | | | DE | 4307010 A1 | 07-10-1993 |
| | | | JP | 6042317 A | 15-02-1994 |
| US 5245968 | A | 21-09-1993 | DE | 69306057 D1 | 02-01-1997 |
| | | | DE | 69306057 T2 | 20-03-1997 |
| | | | EP | 0582430 A1 | 09-02-1994 |
| | | | JP | 6173730 A | 21-06-1994 |
| US 5462022 | A | 31-10-1995 | JP | 7150989 A | 13-06-1995 |

For more details about this annex : see Official Journal of the European Patent Office, No. 12/82